# FASCICULE DE BREVET EUROPEEN

(11) **EP 2 665 016 B1**
(45) Date de publication et mention de la délivrance du brevet: **20.03.2019**
(21) Numéro de dépôt: 13164806.5
(22) Date de dépôt: 23.04.2013
(51) Int. Cl.: H04L 29/06, G06T 1/00

(54) **COMMUNICATION DE MESSAGES À ACCÈS RESTREINT ENTRE ÉQUIPEMENTS.**
NACHRICHTENKOMMUNIKATION ZWISCHEN GERÄTEN MIT EINGESCHRÄNKTEM ZUGRIFF
COMMUNICATING LIMITED-ACCESS MESSAGES BETWEEN DEVICES

(30) Priorité: 16.05.2012 FR 1254534
(43) Date de publication de la demande: 20.11.2013
(73) Titulaire: Orange, 75015 Paris (FR)
(72) Inventeur: Cazoulat, Renaud, 35000 RENNES (FR); Le Guelvouit, Gaëtan, 35510 CESSON-SEVIGNE (FR); Glaziou, Stéphane, 35690 ACIGNE (FR)

(56) Documents cités:
- EP-A2- 1 940 115
- WO-A1-01/43080
- US-A1- 2008 284 565

## Description

L'invention se rapporte à un procédé de communication d'un message entre deux équipements, les équipements étant aptes à se partager des contenus multimédia.

L'invention s'applique tout particulièrement à un contexte dans lequel le contenu est une photographie prise par un premier utilisateur via un premier équipement, et où au moins second utilisateur a la possibilité de poster un message (ou commentaire), via un deuxième équipement, en rapport avec une photographie postée.

Les équipements visés ci-dessus incluent des ressources physiques et logicielles respectives dont au moins un processeur.

Il existe des applications informatiques offrant la possibilité de partager des ensembles de contenus entre plusieurs utilisateurs d'équipement. Ces applications sont notamment basées sur le partage de contenus de type clichés photographiques. Ainsi, un utilisateur peut depuis un équipement, par exemple un téléphone mobile ou un ordinateur, poster une photographie que d'autres utilisateurs peuvent consulter et commenter en postant un commentaire. Ce commentaire est ensuite accessible par tous les autres utilisateurs de l'application.

Un constat est qu'il n'est pas possible de communiquer avec un autre utilisateur autrement que par le dépôt d'un commentaire qui sera accessible par tous les utilisateurs de l'application.

Or, il peut être utile dans certaines situations de restreindre l'accès au commentaire à une partie des utilisateurs de l'application.

US 2008/284565 divulgue un système dans lequel les informations et les messages sont chiffrés, puis codés sous la forme d'une image et envoyés d'un serveur au navigateur Web de l'ordinateur d'un utilisateur. L'image est capturée optiquement, décodée et déchiffrée par un appareil d'authentification.

L'invention vient améliorer la situation.

A cet effet, selon un aspect fonctionnel, l'invention a pour objet un procédé de communication tel que défini dans la revendication 1.

Ainsi, selon l'invention, un message ayant pour origine le premier équipement et comme destinataire le deuxième équipement est inséré dans un contenu associé au premier équipement et partagé avec d'autres équipements sous-entendu d'autres utilisateurs. Le contenu multimédia en question est visible par tous les utilisateurs sans que le message (ou commentaire) qu'il véhicule ne soit accessible. En effet, le chiffrement du message assure que le message ne sera accessible que par le ou les détenteurs d'une clé de déchiffrement.

L'utilisation d'un contenu multimédia pour véhiculer un message offre aussi un autre avantage non négligeable, à savoir le fait de ne pas altérer la fonction première de l'application de partage c'est-à-dire le partage de contenus. L'invention offre ainsi une fonctionnalité d'envoi d'un message par le biais d'un contenu multimédia qui est le coeur même de l'application de partage de contenus multimédias.

Selon un premier mode de mise en oeuvre particulier de l'invention, l'étape d'insertion comprend une étape de dissimulation du message chiffré dans le contenu. Nous verrons dans la suite de la description que le message chiffré peut être dissimulé dans le contenu par le biais d'une technique connue de l'homme du métier appelée stéganographie. Le contenu multimédia en question reste visible par tous les utilisateurs sans que le message (ou commentaire) qu'il véhicule ne soit visible. Une dissimulation du message chiffré dans le contenu multimédia a donc pour avantage de ne pas altérer la restitution du contenu. Aussi, la dissimulation du message chiffré permet de ne pas encombrer une page Internet affichée sur un écran de messages chiffrés qui n'intéressent qu'une partie des utilisateurs, à savoir les détenteurs de la clé de déchiffrement.

Selon un second mode de mise en oeuvre particulier de l'invention, qui pourra être mis en oeuvre alternativement ou cumulativement avec le précédent, à un deuxième équipement est associé une clé de chiffrement, en ce qu'un contenu (qui peut être le même que le contenu dans lequel est inséré un message chiffré) associé à ce deuxième équipement inclut cette clé, en ce que la clé est extraite du contenu pour chiffrer ledit message lors de l'étape de chiffrement et en ce que le message chiffré est inséré dans un contenu lors de l'étape d'insertion, et en ce que le deuxième équipement déchiffre le message au moyen de la clé lors de l'étape d'accès. Selon ce second mode, la clé de chiffrement est incluse dans un contenu appartenant à un utilisateur d'un équipement qui, en publiant ou postant un contenu incluant une clé de chiffrement, accepte implicitement de recevoir des messages chiffrés. Un premier utilisateur d'un premier équipement souhaitant émettre un message chiffré à un deuxième utilisateur n'a donc qu'à rechercher la clé de chiffrement dans les contenus partagés par le deuxième utilisateur, et à sélectionner un contenu partagé par ce deuxième utilisateur afin d'y inclure un message chiffré au moyen de la clé trouvée. Le contenu multimédia incluant la clé en question est visible par le premier utilisateur sans que la clé de chiffrement qu'il véhicule ne soit visible. Aussi, encore une fois, l'utilisation d'un contenu multimédia pour véhiculer une clé offre aussi un autre avantage non négligeable, à savoir le fait d'offrir une fonctionnalité de fourniture d'une clé de chiffrement qui contribue au coeur même de l'application de partage à savoir le partage de contenus.

Selon une variante de ce second mode de mise en oeuvre particulier de l'invention, le chiffrement est basé sur un chiffrement asymétrique utilisant une clé privée et une clé publique, en ce que le contenu associé au deuxième équipement inclut la clé publique. L'utilisation d'un chiffrement asymétrique, par rapport à un chiffrement symétrique, a pour avantage d'éviter des problèmes de divulgation de clé. Le chiffrement asymétrique a l'avantage d'utiliser deux clés dont une, la clé privée sous-entendu secrète, détenue par le récepteur légitime du message chiffré. L'insertion de la clé publique dans le contenu a une double fonction à savoir :
- une fonction de déclaration aux autres utilisateurs de la possibilité pour le propriétaire de la photo de recevoir des commentaires privés ; en d'autres mots le propriétaire déclare avoir souscrit à un service permettant la réception de messages chiffrés.
- Une fonction de diffusion aux autres de la clé publique ; cela évite l'envoi de la clé par exemple par un outil de transmission externe par exemple un email, un message court de type SMS, etc.

A noter que lorsque le propriétaire souhaite annuler cette possibilité, il lui suffit de supprimer la photo qui inclut la clé publique.

Selon cette dernière variante, à un contenu est associée une indication de l'existence de la clé publique dans la photo. L'indication en question est par exemple un attribut de la photo accessible par les autres utilisateurs au même titre que les attributs relatifs au contexte de la photo, par exemple « photos de vacances », « photos de mariage », etc.

Plus généralement, une photo peut inclure une indication relative au message inclus dans un contenu. L'indication est incluse par exemple dans les attributs relatifs à la photo accessibles par les autres utilisateurs. Dans cette configuration, selon un troisième mode de mise en oeuvre particulier de l'invention, qui pourra être mis en oeuvre alternativement ou cumulativement avec les précédents, à un contenu est associée une indication de l'existence d'un message privé dans la photographie. Ainsi, un outil de recherche permet de retrouver facilement parmi les contenus partagés ceux qui contiennent un message privé.

Selon une variante de ce troisième mode, à un contenu est associé en outre au moins un mot-clé identifiant le deuxième équipement destinataire du message chiffré. Cette variante a un intérêt lorsque le nombre de récepteurs détenteurs d'une clé, capables de déchiffrer un message chiffré, est supérieur à deux.

La présente invention vise aussi un programme informatique comportant des instructions (distribuées entre les premier et deuxième équipements par exemple) pour la mise en oeuvre du procédé ci-avant, lorsque ce programme est exécuté par un processeur.

Selon un aspect matériel, l'invention a trait à un système tel que défini dans la revendication 9.

Selon un autre aspect matériel, l'invention a trait à un premier équipement tel que défini dans la revendication 10.

Selon une variante, en référence à la variante relative au second mode de mis en oeuvre, le chiffrement du message est basé sur un chiffrement asymétrique utilisant une clé privée et une clé publique. Dans cette configuration, l'équipement inclut des moyens de recherche de la clé publique dans un contenu partagé.

Selon un autre aspect matériel, l'invention a trait à un deuxième équipement comprenant des moyens de communication pour communiquer avec un réseau de communication, caractérisé en ce qu'il comprend
- des moyens de réception d'un contenu multimédia incluant un message chiffré,
- des moyens d'extraction du message chiffré,
- des moyens de déchiffrement du message chiffré au moyen d'une clé de déchiffrement.

Selon une variante, le deuxième équipement comprend des moyens de transmission de contenus à partager. Selon cette variante, le chiffrement du message est basé sur un chiffrement asymétrique utilisant une clé privée et une clé publique. Dans cette configuration, le deuxième équipement comprend des moyens pour inclure la clé publique dans un contenu à partager et des moyens de transmission du contenu résultant pour être partagé.

Bien entendu, chacun de ces équipements comporte des moyens logiciels tels que des instructions du programme informatique précité, ces instructions étant exécutées par des moyens physiques tels qu'au moins un processeur et une mémoire de travail.

L'invention sera mieux comprise à la lecture de la description qui suit, donnée à titre d'exemple et faite en référence aux dessins annexés sur lesquels :
- des moyens de demande de stockage d'un contenu dans un ensemble de contenus multimédia partagé avec au moins un autre équipement.

Selon une variante, en référence à la variante relative au second mode de mis en oeuvre, le chiffrement du message est basé sur un chiffrement asymétrique utilisant une clé privée et une clé publique. Dans cette configuration, l'équipement inclut des moyens de recherche de la clé publique dans un contenu partagé.

Selon un autre aspect matériel, l'invention a trait à un deuxième équipement comprenant des moyens de communication pour communiquer avec un réseau de communication, caractérisé en ce qu'il comprend
- des moyens de réception d'un contenu multimédia incluant un message chiffré,
- des moyens d'extraction du message chiffré,
- des moyens de déchiffrement du message chiffré au moyen d'une clé de déchiffrement.

Selon une variante, le deuxième équipement comprend des moyens de transmission de contenus à partager. Selon cette variante, le chiffrement du message est basé sur un chiffrement asymétrique utilisant une clé privée et une clé publique. Dans cette configuration, le deuxième équipement comprend des moyens pour inclure la clé publique dans un contenu à partager et des moyens de transmission du contenu résultant pour être partagé.

Bien entendu, chacun de ces équipements comporte des moyens logiciels tels que des instructions du programme informatique précité, ces instructions étant exécutées par des moyens physiques tels qu'au moins un processeur et une mémoire de travail.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
Les figures 2 à 4 représentent les circuits des équipements impliqués dans le procédé de l'invention.
Les figures 5 à 7 sont des algorithmes illustrant différentes phases de l'exemple de réalisation décrit en référence à la figure 1.
Les figures 8 et 9 sont des vues schématiques de contenus respectifs, en l'espèce des photographies, illustrant le troisième mode de réalisation.

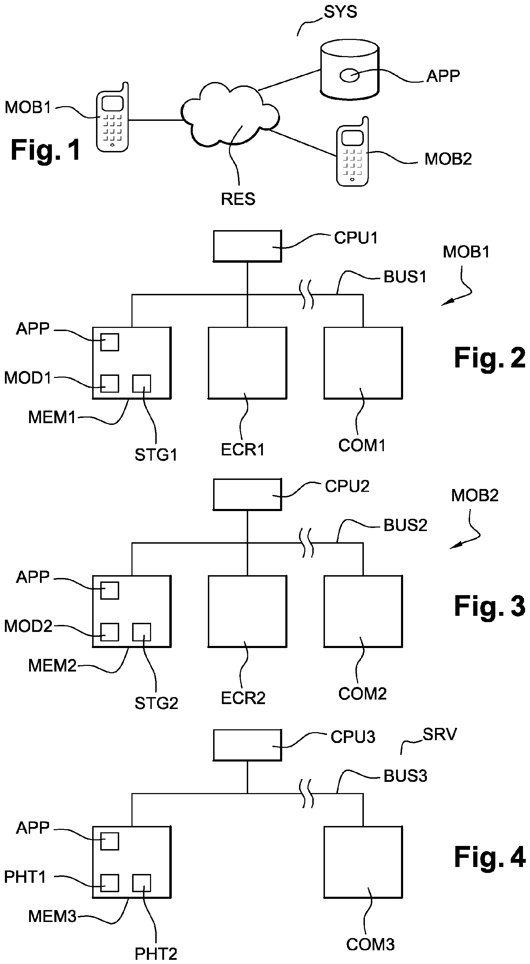

La figure 1 représente un système SYS incluant deux équipements dont un premier équipement MOB1 d'un premier utilisateur UT1 et un deuxième équipement MOB2 d'un deuxième utilisateur UT2.

A noter qu'un utilisateur désigne indifféremment un utilisateur ou un groupe d'utilisateurs.

Le système comprend en outre un troisième équipement illustré au moyen d'un serveur SRV incluant une application APP de partage de contenus multimédias.

Dans notre exemple, le contenu est une photographie mais pourrait aussi être une vidéo, un contenu sonore, etc.

Le nombre d'équipements peut bien évidemment être supérieur à deux. Cependant, dans notre exemple, le nombre est réduit à deux pour des raisons de clarté de l'exposé.

Les équipements communiquent entre eux via un réseau de communication RES. Le réseau est quelconque. Dans notre exemple, le réseau est le réseau Internet connu de l'homme du métier.

Les équipements décrits ci-dessus sont équipés de ressources physiques et logicielles respectives. En l'espèce, en référence aux figures 2 à 4, le premier équipement MOB1 comprend
- un processeur CPU1, dit premier processeur,
- des moyens de stockage MEM1, dit premiers moyens de stockage,
- des moyens de restitution illustrés par un écran ECR1, dit premier écran,
- des moyens de communication COM1, dit premiers moyens de communication, pour communiquer avec l'extérieur via le réseau de communication RES.

Le deuxième équipement MOB2 comprend
- un processeur CPU2, dit deuxième processeur,
- des moyens de stockage MEM2, dit deuxièmes moyens de stockage,
- des moyens de restitution illustrés par un écran ECR2, dit deuxième écran,
- des deuxièmes moyens de communication COM2 pour communiquer avec l'extérieur via le réseau de communication RES

Le serveur SRV comprend
- un processeur CPU3, dit troisième processeur,
- des moyens de stockage MEM3, dit troisièmes moyens de stockage, dans lesquels sont stockées des ensembles de contenus partagés issues des différents équipements qui utilisent l'application de partage APP,
- des moyens de communication COM3, dits troisièmes moyens de communication, pour communiquer avec l'extérieur via le réseau de communication

La mémoire MEM3 de ce serveur stocke deux ensembles de photographies postés respectivement par le premier et le deuxième utilisateur. Dans notre exemple, chaque ensemble comprend une photographie ; une première photographie numérique PHT1 et une deuxième photographie numérique PHT2 postées respectivement par le premier utilisateur et le deuxième utilisateur depuis le premier équipement et le deuxième équipement.

Dans chaque dispositif, les moyens sont reliés au processeur par l'intermédiaire d'un premier bus BUS1, d'un deuxième bus BUS2, et d'un troisième bus BUS3. Rappelons qu'un bus a pour fonction d'assurer le transfert de données numériques entre les différents circuits de l'équipement considéré. Dans notre exemple, le bus en question inclut un bus de données et un bus de contrôle.

A noter aussi que, dans notre exemple, les moyens de stockage décrits ci-dessus sont des mémoires permanentes, par exemple de type ROM (acronyme anglo-saxon de Read Only Memory) et que les dispositifs incluent également une mémoire vive respective (non représentée) servant à stocker de manière non durable des données de calcul utilisées notamment lors de la mise en oeuvre du procédé.

Les troisièmes moyens de stockage MEM3 stockent une application de partage de contenus APP aptes à être téléchargées via le réseau RES.

Dans notre exemple, l'application APP est téléchargée depuis le serveur SRV dans les équipements souhaitant utiliser l'application, dans note exemple le premier et le deuxième équipement. L'utilisation de l'application nécessite ensuite une exécution par le biais du processeur de l'équipement dans lequel est stockée l'application.

Aussi, la première mémoire MEM1 et la deuxième mémoire MEM2 stockent respectivement, dans notre exemple, un module MOD1 et MOD2 aptes à générer/calculer des clés de chiffrement. A noter qu'un module situé sur le réseau aurait pu être utilisé en lieu et place d'une pluralité de modules présents sur chaque équipement afin de mutualiser le calcul des clés de chiffrement.

Dans notre exemple, le chiffrement se fera au moyen d'un algorithme de chiffrement asymétrique. Les modules MOD1 ou MOD2 sont donc aptes, sur requête, à calculer une paire de clés, à savoir une clé publique K_PUB et une clé privée K_PRV, respectivement. Dans cette configuration, un message chiffré avec la clé publique ne pourra être déchiffré que par le détenteur de la clé privée correspondante.

Selon l'invention, les équipements vont pouvoir échangés des messages à accès restreint. Par exemple, le premier équipement peut poster un message chiffré qui ne pourra être lu que pas le deuxième équipement. A cet effet, une photographie appartenant au deuxième utilisateur, utilisateur souhaitant recevoir un message privé, inclut une clé qui sert au chiffrement du message que souhaite transmettre le premier utilisateur à ce deuxième utilisateur ; le message chiffré résultant est également inclut dans une photographie qui sera partagée avec tous les utilisateurs du service, le message chiffré, de préférence dissimulé dans la photographie, ne pouvant quant à lui n'être lu que par le deuxième utilisateur grâce à la clé de déchiffrement.

Précisons ici que poster un message signifie que le message est transmis à destination du serveur pour y être stocké et partagé avec d'autres utilisateurs.

Afin de dissimuler une information dans une photographie, les équipements sont équipés d'un module logiciel STG apte à inclure une information dans une photographie ; en l'espèce, un module STG permet de dissimuler la clé de chiffrement ou le message chiffré dans la photographie afin de ne pas altérer la restitution de la photographie. La dissimulation en question peut être réalisée au moyen d'une technique dite de stéganographie connue de l'homme du métier.

Dans notre exemple de réalisation, le serveur a pour fonction notamment le stockage de photographies postées depuis le premier et le deuxième équipement afin de partager les photographies entre équipements.

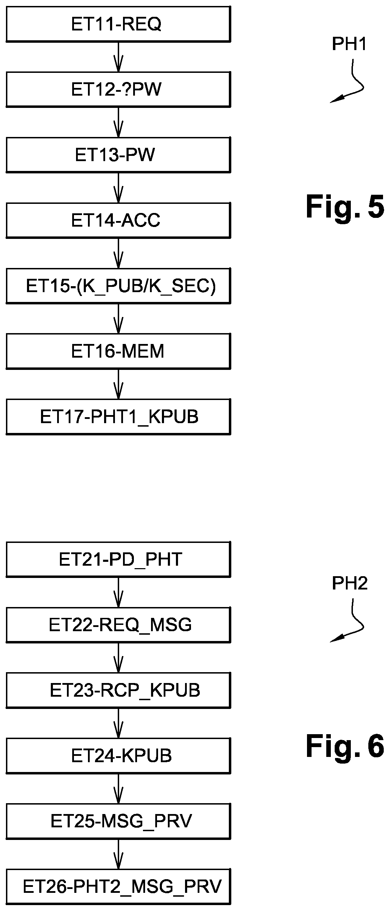

Un mode de réalisation est décrit en référence aux figures 5 à 7 sur lesquelles sont représentées des algorithmes respectifs relatifs à différentes phases du mode de réalisation du procédé de l'invention.

Comme indiqué précédemment, dans notre exemple, le message privé est chiffré au moyen d'un algorithme de chiffrement asymétrique utilisant un couple de clés, à savoir une clé publique et une clé privée.

Le procédé peut être décomposé en trois phases comprenant chacune plusieurs étapes :
- Une phase PH1 de création de clés publiques et privées ;
- Une phase PH2 de création et d'envoi d'un message privé c'est-à-dire à accès restreint ;
- Et une phase PH3 de lecture du message privé.

En référence à la figure 5, la phase PH1 de création des clés comprend les étapes suivantes :
Lors d'une première étape ET11-REQ, une demande d'accès aux photographies est transmise du premier équipement au serveur SRV.
Lors d'une deuxième étape ET12- ?PW, le serveur requiert un mot de passe PW.
Lors d'une troisième étape ET13-PW, le premier utilisateur saisi le mot de passe ; ensuite le premier équipement MOB1 transmet le mot de passe.
Lors d'une quatrième étape ET14-ACC, le serveur donne accès à l'ensemble des photographies si le mot de passe est correct. Dans la négative, le serveur ne donne pas accès aux photographies.

On suppose dans la suite que le code saisi est correct.

A Ce stade, on considère que le premier utilisateur souhaite recevoir des messages privés par exemple en relation avec ses photographies. En conséquence, lors d'une cinquième étape ET15-(K_PUB/K_SEC), le module MOD1 serveur crée une paire de clé K_PUB/K_SEC.

Lors d'une sixième étape ET16-MEM, la paire de clé est stockée dans la première mémoire MEM1.

Après création de la paire de clés, lors d'une septième étape ET17-PHT1_KPUB, la clé publique est incluse dans une photographie appartenant au premier utilisateur. D'une manière générale, la photographie utilisée pour transporter la clé publique est soit une nouvelle photographie proposée par le premier utilisateur ou soit une photographie choisie dans l'ensemble de photographies postées par le premier utilisateur. Dans notre exemple, la première photographique PHT1 transporte la clé publique.

La technique de dissimulation utilisée est quelconque. Par exemple, la technique de stéganographie peut être utilisée à cette fin.

Une autre façon de dissimuler pourrait consister à tout simplement réduire la taille des caractères de la clé publique de telle sorte que la visualisation de la photographie ne soit pas altérée. Dans cette configuration, un programme d'ordinateur est prévu afin de garantir la lecture des caractères quelles que soit leurs tailles respectives.

Une fois la clé dissimulée dans la première photographie PHT1, cette dernière est postée et publiée par le biais du serveur SRV afin d'être accessible par les autres utilisateurs de l'application de partage APP.

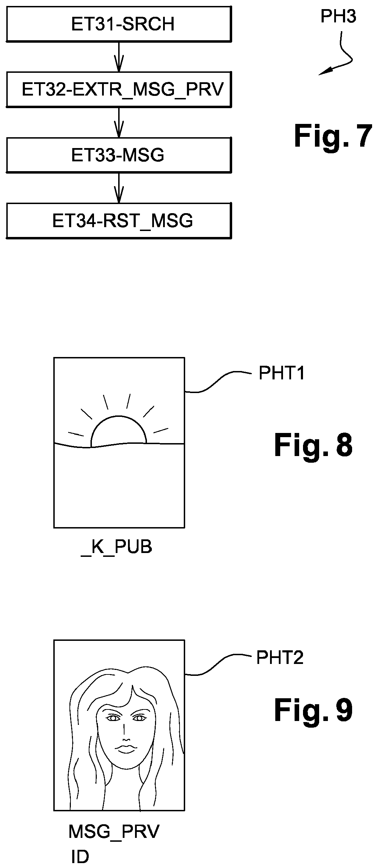

Dans notre exemple, en référence à la figure 8, cette première photographie PHT1 est associée à un mot-clé, par exemple K_PUB, identifiant cette photographie comme incluant une clé publique. Il est même possible d'utiliser une image promotionnelle, contenant par exemple l'inscription du type "envoyez moi un message privé grâce à l'application". Les utilisateurs de l'application, en voyant cette image, seront donc incités à utiliser le programme dédié à l'envoi de messages privés sous-jacent afin d'envoyer un message privé à une personne.

En référence à la figure 6, la phase d'envoi d'un message comprend les étapes suivantes :
La phase de création de clés est suivie dune phase de création et d'envoi d'un message.

Lors d'une première étape ET21-RD_PHT, le deuxième utilisateur accède à la première photographie postée par le premier équipement.

Lors d'une deuxième étape ET22-REQ_MSP, le deuxième utilisateur requiert auprès du serveur un envoi d'un message privé à l'équipement qui a posté cette photo, dans notre exemple le premier équipement.

Le sens d'exécution de la première et de la deuxième étape est quelconque.

Lors d'une troisième étape ET23-RCP_KPUB, l'application APP tente de récupérer la clé publique K_PUB du premier utilisateur.

Deux cas de figure se présentent :
- Soit la clé K_PUB est incluse dans la photographie ; dans ce cas, l'application extrait la clé publique ;
- Soit la photographie sélectionnée ne contient pas la clé publique; dans ce cas, l'application recherche une photographie incluant une clé dans l'ensemble de photographies appartenant au premier utilisateur.

Lors d'une quatrième étape ET24-KPUB, une fois la clé publique K_PUB extraite, un message est écrit via le deuxième équipement MOB2.

Lors d'une cinquième étape ET25-MSG_PRV, le deuxième module MOD2 chiffre le message MSG avec la clé publique K_PUB.

Lors d'une sixième étape ET26-PHT2_MSG_PRV, à l'image de la septième étape ET17-PHT1_KPUB en référence à la phase relative à la création de clés, le message chiffré est inclus dans la deuxième photographie PHT2 par le biais du module STG2. La photographie choisie est quelconque, elle peut provenir de l'ensemble de photographies postées ou pourrait être une nouvelle photographie. Dans notre exemple, la photographie est la deuxième photographie PHT2

Dans notre exemple, l'application APP associe à la deuxième photographie résultante une indication que le message est un message privé, et une indication sur le ou les destinataires du message. Dans notre exemple, en référence à la figure 8, la deuxième photographie PHT2 est associée ces deux informations :
- MSG_PRV pour indiquer que la photographie comporte un message privé ;
- ID pour indiquer l'identifiant du deuxième équipement à qui est destiné le message chiffré.

Un exemple de contenu incluant un message privé dissimulé est représenté sur la figure 8. Comme on peut le voir, la photographie est visible et le message chiffré n'est pas visible ; le message n'altère donc pas la visibilité de la photographie. La photo résultante est une photo classique comme les autres à la différence qu'un message est dissimulé à l'intérieur sans être visible à l'oeil nu. Le procédé de l'invention n'altère donc pas la fonction principale de l'outil à savoir le partage de photographies.

Une troisième phase PH3 a trait à la lecture du message chiffré.

A ce stade du procédé, le contenu incluant le message chiffré est transmis au serveur SRV pour y être stocké dans la troisième mémoire MEM3 afin d'y être partagée entre les utilisateurs de l'application.

Rappelons que cette photographie est associée à des mots clés à savoir : MSG_PRV et ID définis ci-dessus.

Le deuxième utilisateur a la possibilité de vérifier si un message privé lui est destiné. Pour cela, lors d'une première étape ET31-SRCH, le deuxième utilisateur recherche grâce aux mots clés, si une ou plusieurs photos incluent le mot-clé MSG_PRV et l'identifiant du deuxième équipement ID. Dans notre exemple, l'outil de recherche identifie la première photographie PHT1 comme une photographie incluant un message privé et dont l'identifiant déclaré est l'identifiant du deuxième équipement.

Lors d'une deuxième étape ET32-EXTR_MSG_PRV, le module STG2 extrait le message privé.

Lors d'une troisième étape ET33-MSG, le deuxième module MOD2 déchiffre le message privé avec la clé privée K_PRV stockée dans la deuxième mémoire MEM2.

Lors d'une quatrième étape ET43-RST_MSG, le deuxième équipement restitue le message sur le deuxième écran ECR2.

On a vu dans ce qui précède que le système comprenant des moyens de partage d'ensembles respectifs de contenus multimédia (PHT). Ces moyens de partage incluent entre autres la troisième mémoire MEM3 dans laquelle sont stockés les ensembles.

Aussi, afin de partager des contenus avec d'autres équipements et de commenter des contenus émanant de ces autres équipements, le premier équipement MOB1 est-il équipé
- de moyens de chiffrement d'un message au moyen d'une clé de chiffrement,
- de moyens d'insertion du message chiffré dans un contenu,
de moyens de demande de stockage d'un contenu dans un ensemble de contenus multimédia partagé avec au moins un autre équipement. De la même manière, afin d'accéder à des contenus incluant des messages privés, le deuxième équipement MOB2 comprend
- des moyens de réception d'un contenu multimédia incluant un message chiffré ; le contenu étant inclut dans un ensemble de contenus partagé par un autre équipement ;
- des moyens d'extraction du message chiffré ;
- des moyens de déchiffrement du message chiffré au moyen d'une clé de déchiffrement.

Dans ce qui précède la troisième mémoire MEM3 sert de lieu de partage. En variante, le lieu de partage peut être formé par d'autres mémoires comme par exemple les mémoires des équipements formant un réseau de pair. Dans cette configuration, les ensembles de photographies seraient stockés dans la première mémoire et la deuxième mémoire. Poster une photographie depuis le premier équipement signifie dans cette configuration que la photographie est stockée dans la première mémoire MEM1 pour y être stockée, ou pourquoi pas dans la deuxième mémoire MEM2, ou dans une autre mémoire.

A noter que le terme « moyens » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les moyens concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de communication d'un message (MSG) issu d'un premier équipement (MOB1) et destiné à un deuxième équipement (MOB2), les équipements étant aptes à se partager des ensembles respectifs de contenus multimédia (PHT), la procédé comprenant:
- une étape de chiffrement du message (ET25) au moyen d'une clé de chiffrement,
- une étape d'insertion (ET26) du message chiffré dans un contenu,
- une étape d'association entre le contenu résultant de l'étape d'insertion, et au moins un attribut (MSG_PRV, ID) ayant un lien avec le message inséré et étant accessible par les autres utilisateurs ;
- une étape de stockage du contenu résultant des étapes précédentes dans l'ensemble partagé associé au premier équipement,
- une étape d'accès au contenu incluant une extraction (ET32) du message chiffré (MSG_PRV) et un déchiffrement du message par le deuxième équipement au moyen d'une clé de déchiffrement.

2. Procédé de communication selon la revendication 1, dans laquelle l'étape d'insertion (ET26) comprend une étape de dissimulation du message chiffré dans le contenu.

3. Procédé de communication selon la revendication 1, dans laquelle un deuxième équipement est associé une clé de chiffrement (K_PUB), en ce qu'un contenu associé à ce deuxième équipement inclut cette clé, en ce que la clé est extraite du contenu pour chiffrer ledit message lors de l'étape de chiffrement et en ce que le message chiffré (MSG_PRV) est inséré dans un contenu lors de l'étape d'insertion, et en ce que le deuxième équipement (MOB2) déchiffre le message au moyen de la clé lors de l'étape d'accès.

4. Procédé de communication selon la revendication 3, dans laquelle le chiffrement est basé sur un chiffrement asymétrique utilisant une clé privée et une clé publique, en ce que le contenu associé au deuxième équipement inclut la clé publique.

5. Procédé de communication selon la revendication 1, dans laquelle un contenu est associé une indication de l'existence d'un message privé dans le contenu.

6. Procédé de communication selon la revendication 5, dans laquelle un contenu est associé en outre au moins un mot-clé identifiant le deuxième équipement destinataire du message chiffré.

7. Procédé de communication selon la revendication 4, dans laquelle un contenu est associée une indication de l'existence de la clé publique dans le contenu.

8. Programme informatique comportant des instructions pour la mise en oeuvre du procédé selon l'une des revendications précédentes, lorsque ce programme est exécuté par un processeur.

9. Système (SYS) incluant un premier équipement et un deuxième équipement (MOB2) aptes à communiquer au travers d'un réseau de communication (RES), le système comprenant des moyens de partage d'ensembles respectifs de contenus multimédia (PHT), dans lequel le premier équipement comprend
- des moyens de chiffrement du message au moyen d'une clé de chiffrement,
- des moyens d'insertion du message chiffré dans un contenu,
- des moyens d'association entre le contenu résultant de l'étape d'insertion, et au moins un attribut (MSG_PRV, ID) ayant un lien avec le message inséré et étant accessible par les autres utilisateurs ;
en ce que le système comprend en outre des moyens de stockage du contenu incluant le message chiffré et ledit au moins un attribut dans l'ensemble de contenus multimédia partagé associé au premier équipement, et en ce que le deuxième équipement comprend des moyens d'accès au contenu par extraction du message chiffré, et par déchiffrement du message au moyen d'une clé de déchiffrement.

10. Equipement comprenant des moyens de chiffrement d'un message au moyen d'une clé de chiffrement,
- des moyens d'insertion du message chiffré dans un contenu,
- des moyens d'association entre le contenu résultant de l'étape d'insertion, et au moins un attribut (MSG_PRV, ID) ayant un lien avec le message inséré résultant de l'étape d'insertion et étant accessible par les autres utilisateurs;
- des moyens de demande de stockage d'un contenu résultant d'une insertion et d'une association dans un ensemble de contenus multimédia partagé avec au moins un autre équipement.

11. Equipement selon la revendication 10, dans lequel le chiffrement du message est basé sur un chiffrement asymétrique utilisant une clé privée et une clé publique, et en ce que l'équipement inclut des moyens de recherche de la clé publique dans un contenu partagé.

## Patentansprüche

1. Verfahren zum Kommunizieren einer Nachricht (MSG), die aus einem ersten Gerät (MOB1) stammt und für ein zweites Gerät (MOB2) bestimmt ist, wobei die Geräte geeignet sind, jeweils Einheiten von multimedialen Inhalten (PHT) zu teilen, wobei das Verfahren umfasst:
- einen Schritt des Verschlüsselns der Nachricht (ET25) mittels eines Verschlüsselungsschlüssels,
- einen Schritt des Einfügens (ET26) der verschlüsselten Nachricht in einen Inhalt,
- einen Schritt des Zuordnens zwischen dem aus dem Einfügeschritt resultierenden Inhalt und mindestens einem Attribut (MSG_PRV, ID), das in einem Zusammenhang mit der eingefügten Nachricht steht und auf das die anderen Nutzer Zugriff haben,
- einen Schritt des Speicherns des aus den vorhergehenden Schritten resultierenden Inhalts in der geteilten Einheit, die dem ersten Gerät zugeordnet ist,
- einen Schritt des Zugriffs auf den Inhalt, der ein Extrahieren (ET32) der verschlüsselten Nachricht (MSG_PRV) und ein Entschlüsseln der Nachricht durch das zweite Gerät mittels eines Entschlüsselungsschlüssels umfasst.

2. Kommunikationsverfahren nach Anspruch 1, wobei der Einfügeschritt (ET26) einen Schritt des Verbergens der verschlüsselten Nachricht in dem Inhalt umfasst.

3. Kommunikationsverfahren nach Anspruch 1, wobei einem zweiten Gerät ein Verschlüsselungsschlüssel (K_PUB) zugeordnet ist, ein Inhalt, der diesem zweiten Gerät zugeordnet ist, diesen Schlüssel enthält, der Schlüssel aus dem Inhalt extrahiert wird, um die Nachricht beim Verschlüsselungsschritt zu verschlüsseln und die verschlüsselte Nachricht (MSG_PRV) beim Einfügeschritt in einen Inhalt eingefügt wird und das zweite Gerät (MOB2) die Nachricht beim Zugriffsschritt mittels des Schlüssels entschlüsselt.

4. Kommunikationsverfahren nach Anspruch 3, wobei die Verschlüsselung auf einer asymmetrischen Verschlüsselung beruht, die einen privaten Schlüssel und einen öffentlichen Schlüssel verwendet, dass der dem zweiten Gerät zugeordnete Inhalt den öffentlichen Schlüssel beinhaltet.

5. Kommunikationsverfahren nach Anspruch 1, wobei einem Inhalt ein Hinweis auf das Vorhandensein einer privaten Nachricht in dem Inhalt zugeordnet ist.

6. Kommunikationsverfahren nach Anspruch 5, wobei einem Inhalt ferner mindestens ein Schlüsselbegriff zugeordnet ist, der das zweite Gerät, das Empfänger der verschlüsselten Nachricht ist, identifiziert.

7. Kommunikationsverfahren nach Anspruch 4, wobei einem Inhalt ein Hinweis auf das Vorhandensein des öffentlichen Schlüssels in dem Inhalt zugeordnet ist.

8. Computerprogramm mit Anweisungen zur Umsetzung des Verfahrens nach einem der vorgehenden Ansprüche, wenn dieses Programm von einem Prozessor ausgeführt wird.

9. System (SYS), das ein erstes Gerät (MOB1) und ein zweites Gerät (MOB2) beinhaltet, die geeignet sind, über ein Kommunikationsnetzwerk (RES) zu kommunizieren, wobei das System Mittel zum Teilen von jeweiligen Einheiten von multimedialen Inhalten (PHT) umfasst, wobei das erste Gerät umfasst:
- Mittel zum Verschlüsseln der Nachricht mittels eines Verschlüsselungsschlüssels,
- Mittel zum Einfügen der verschlüsselten Nachricht in einen Inhalt,
- Mittel zum Zuordnen zwischen dem aus dem Einfügeschritt resultierenden Inhalt und mindestens einem Attribut (MSG_PRV, ID), das in einem Zusammenhang mit der eingefügten Nachricht steht und auf das die anderen Nutzer Zugriff haben,
dass das System ferner Mittel zum Speichern des Inhalts, der die verschlüsselte Nachricht und das mindestens eine Attribut in der geteilten Einheit von multimedialen Inhalten, die dem ersten Gerät zugeordnet ist, beinhaltet, umfasst und das zweite Gerät Mittel zum Zugreifen auf den Inhalt durch Extrahieren der verschlüsselten Nachricht und durch Entschlüsseln der Nachricht mittels eines Entschlüsselungsschlüssels umfasst.

10. Gerät (MOB1), umfassend Mittel zum Verschlüsseln der Nachricht mittels eines Verschlüsselungsschlüssels,
- Mittel zum Einfügen der verschlüsselten Nachricht in einen Inhalt,
- Mittel zum Zuordnen zwischen dem aus dem Einfügeschritt resultierenden Inhalt und mindestens einem Attribut (MSG_PRV, ID), das in einem Zusammenhang mit der aus dem Einfügeschritt resultierenden eingefügten Nachricht steht und auf das die anderen Nutzer Zugriff haben;
- Mittel zum Anfordern des Speicherns eines Inhalts, der aus einem Einfügen und einem Zuordnen in einer Einheit von multimedialen Inhalten, die mit mindestens einem anderen Gerät geteilt wird, resultiert.

11. Gerät (MOB1) nach Anspruch 10, wobei die Verschlüsselung der Nachricht auf einer asymmetrischen Verschlüsselung beruht, die einen privaten Schlüssel und einen öffentlichen Schlüssel verwendet, und dass das Gerät Mittel zum Suchen des öffentlichen Schlüssels in einem geteilten Inhalt beinhaltet.

## Claims

1. Method of communication of a message (MSG) arising from a first device and intended for a second device (MOB2), the devices being able to share respective sets of multimedia contents (PHT), the method comprising:
- a step of encrypting the message (ET25) by means of an encryption key,
- a step of inserting (ET26) the encrypted message into a content,
- a step of associating between the content resulting from the inserting step, and at least one attribute (MSG_PRV, ID) having a link with the inserted message and being accessible by the other users;
- a step of storing the content resulting from the preceding steps in the shared set associated with the first device,
- a step of accessing the content including an extracting (ET32) of the encrypted message (MSG_PRV) and a decrypting of the message by the second device by means of a decryption key.

2. Method of communication according to Claim 1, in which the inserting step (ET26) comprises a step of concealing the encrypted message in the content.

3. Method of communication according to Claim 1, in which a second device is associated an encryption key (K_PUB), in that a content associated with this second device includes this key, in that the key is extracted from the content so as to encrypt said message during the encrypting step and in that the encrypted message (MSG_PRV) is inserted into a content during the inserting step, and in that the second device (MOB2) decrypts the message by means of the key during the accessing step.

4. Method of communication according to Claim 3, in which the encryption is based on an asymmetric encryption using a private key and a public key, in that the content associated with the second device includes the public key.

5. Method of communication according to Claim 1, in which a content is associated with an indication of the existence of a private message in the content.

6. Method of communication according to Claim 5, in which a content is associated furthermore with at least one keyword identifying the second device, recipient of the encrypted message.

7. Method of communication according to Claim 4, in which a content is associated with an indication of the existence of the public key in the content.

8. Computer program comprising instructions for the implementation of the method according to one of the preceding claims, when this program is executed by a processor.

9. System (SYS) including a first device and a second device (MOB2) which are able to communicate through a communication network (RES), the system comprising means for sharing respective sets of multimedia contents (PHT), in which the first device comprises
- means for encrypting the message by means of an encryption key,
- means for inserting the encrypted message into a content,
- means for associating between the content resulting from the inserting step, and at least one attribute (MSG_PRV, ID) having a link with the inserted message and being accessible by the other users;
in that the system furthermore comprises means for storing the content including the encrypted message and said at least one attribute in the shared multimedia contents set associated with the first device, and in that the second device comprises means for accessing the content by extraction of the encrypted message, and by decryption of the message by means of a decryption key.

10. Device comprising means for encrypting a message by means of an encryption key,
- means for inserting the encrypted message into a content,
- means for associating between the content resulting from the inserting step, and at least one attribute (MSG_PRV, ID) having a link with the inserted message resulting from the inserting step and being accessible by the other users;
- means for requesting storage of a content resulting from an inserting and an associating in a multimedia contents set shared with at least one other device.

11. Device according to Claim 10, in which the encryption of the message is based on an asymmetric encryption using a private key and a public key, and in that the device includes means for searching for the public key in a shared content.
